# EUROPEAN PATENT SPECIFICATION

(11) **EP 3 736 213 B1**
(45) Date of publication and mention of the grant of the patent: **15.02.2023**
(21) Application number: 19425034.6
(22) Date of filing: 07.05.2019
(51) Int. Cl.: B64C 29/00, B64C 25/10, B64C 3/38

(54) **HYBRID UNMANNED AERIAL VEHICLE**
HYBRIDES UNBEMANNTES LUFTFAHRZEUG
VÉHICULE AÉRIEN SANS PILOTE HYBRIDE

(43) Date of publication of application: 11.11.2020
(73) Proprietor: International Aviation Supply I.A.S. S.R.L., 72100 Brindisi BR (IT)
(72) Inventor: DE OTTO, Gian Livio, 60026 Numana AN (IT); GRASSO, Teodoro, 72100 Brindisi BR (IT); LACAITA, Cosimo, 72100 Brindisi BR (IT); MAIORANO, Alessandro, 72024 Manduria TA (IT); MARTORANA, Vincenzo, 72100 Brindisi BR (IT); RUGGIERO, Andrea, San Vito dei Normanni BR (IT)
(74) Representative: Papa, Elisabetta

(56) References cited:
- EP-A2- 1 686 057
- CN-U- 207 943 165
- US-A- 3 302 907
- US-A- 3 383 074
- US-A1- 2017 305 526
- US-A1- 2018 105 254
- US-A1- 2019 127 056

## Description

### Technical Field of the Invention

The present invention relates to the field of aerospace, in particular an aviation vehicle.

The present invention, more specifically, relates to a convertible aircraft capable of changing its configuration according to the phases of flight.

### Background

Generally speaking an "hybrid" aircraft is a flying machine capable of taking off and landing vertically and fly like a fixed wing aircraft with high performance when cruising.

There are different types of hybrid aircraft, identified for the sake of simplicity as convertiplanes, which are briefly described below.

A first type is an aircraft using multi-rotor systems with vertical axis for vertical take-off. These multi-rotor systems are stopped during the transition phase while a horizontal-axis motor is used for horizontal propulsion. Upon landing, the multi-rotor system returns to operation and, during the reverse transition phase, replaces the horizontal engine which is gradually stopped.

In these cases, the multi-rotor system (generally electrical motors with propellers) remains in the current position, constituting a significant aerodynamic drag which penalizes the performance of the aircraft during cruise which means more than 95% of the standard operating time.

This type of aircraft, on the other hand, has the advantage of not requiring complex solutions from the construction point of view.

Examples of the above-mentioned aircraft are disclosed in US9120560, US 2013/0092799, US10081436, USD822579.

A second type is represented by aircraft using the same engines both for take-off and landing as well as for horizontal flight. This is made possible by the gradual tilting of the engines, from vertical to horizontal axis with a transition managed by the control system.

These systems are particularly complex from the constructive point of view for several reasons, mainly for the presence of gearboxes and transmission shafts provided for tilting of the engines and also due to the robustness of the control that is required.

Furthermore, in this type of applications the engines are particularly overloaded in the take-off, landing and transition phases, thus reducing their operating life (MTBO - Main Time Between Overhaul) and increasing the risk of unpredictable failures.

This type includes the Bell-Boeing V-22 Osprey aircraft and, as an example, the one described in US5419514.

A third type is represented by aircraft that exploit the same principle as in the previous case but utilizes the tilting of the engines and propellers during the transition phases by rotating the entire wings or portions of them.

Even in these cases the constructive complexity associated with that of the control and the overload condition of the engines are certainly critical issues. Examples of application of these types are the T-Wing Project in preliminary phase of launch and the Agusta Westland AW 609 (under development).

Yet another type of hybrid aircraft are helicopters, also known as heliplanes, which in the transition phase stop the rotor in such a position that the blades constitute, for all intents and purposes, the wing of a fixed wing aircraft.

An example of this application was the GBA-DARPA heliplane as a proof-of-concept, long-range, Vertical Take-Off and Landing (VTOL) aircraft intended to cruise at twice the speed of conventional helicopters. DARPA's objective was to achieve performance with a rotary-wing aircraft comparable to that of a fixed-wing plane. The concept combined technical aspects of a gyroplane, which GBA had been working on since the late 1980 with a fixed-wing business jet. The work was part of a potential multi-year, US$ 40-million, four-phase program. Due to issues with noise generated by the tip-jets, the program was terminated by DARPA in 2008.

According to both the second and third type, the constructive complexity, associated with the need to use more powerful (and therefore heavier) engines to compensate for the overload effects mentioned above, leads to significant weight increase which, ultimately, makes those solutions applicable only to medium to large sized aircraft (well over 1,000 kg).

The last type mentioned above has not led to any developments nor to production of operational aircrafts. In fact, in addition to the example of the GBA-DARPA already described, even the military aircraft AH-56 Cheyenne did not go beyond the prototype stage, demonstrating the lack of real interest from potential users and aircraft manufacturers who considered no further financing for the development of similar applications.

As further examples, US2017/305526A1 discloses a drone provided with a vertical thrust and a folding wings system, while US3302907A discloses an aircraft having a propulsion unit mounted to be movable between a position in which the unit is disposed within the fuselage and a further position in which it is disposed externally. US2018/105254A1 discloses an UAV having a plurality of foldable arms connected to the fuselage through a rotating mechanism in order to be contained in different portions of the side face of the fuselage. US2019/127056A1 discloses a vertical flight aircraft accommodating a cargo-carrying container and a latching mechanism for attaching and detaching the container. CN 207943165 U discloses an UAV having a lifting and a landing gear and EP1686057A2 discloses a helicopter having rotatable wings functioning either as landing struts or means for producing lift.

In light of the above, it is therefore evident that hybrid aircraft developed so far have some characteristics that make them, depending on the type, particularly complex from the constructive point of view, not very efficient from the point of view of aerodynamic performance, with particularly difficult conditions for propulsion systems.

### Summary of the Invention

The technical problem placed and solved by the present invention is then to provide a convertible aircraft that allows to overcome the above-illustrated drawbacks with reference to the prior art.

This problem is solved by a convertible aircraft according to claim 1.

Additional preferred features of the present invention are defined in the depending claims.

The convertible aircraft according to the present invention comprises a fuselage body, which extends along a main longitudinal direction of development, and is connected to a propulsion unit. This propulsion unit comprises first motor means configured to supply a thrust parallel to said longitudinal direction and second motor means configured to supply a thrust orthogonal to said longitudinal direction. The second motor means is configured to be movable between an extracted configuration and a retracted configuration.

The convertible aircraft also comprises a wing folding system having opposed wings projecting from the fuselage body and configured to be folded in order to define opposite terminal portions. Each of these terminal portions is intended to support the aircraft on a landing and/or taking-off region. The fuselage body includes a receiving housing so that the overall configuration of the aircraft permits the second motor means to be entirely enclosed into the receiving housing in said retracted configuration.

Advantageously, this solution provides for a "hybrid" aircraft with high flexibility and aerodynamic efficiency when flying as a fixed wing aircraft. In fact, it is possible to move the second motor means, preferably multi-rotor electric motor, so as to minimize aerodynamic drag of the aircraft due to obstruction from propulsion elements associated to the fuselage. These propulsion elements are preferably housed completely inside a dedicated housing formed into the same fuselage.

Again, such a solution allows to adjust the position of motors supplying thrust along a direction orthogonal to the main longitudinal direction of development of the aircraft, hence, increasing the strength of the control during the Vertical Take-Off and Landing (VTOL) operation, for example in function of the wind conditions.

The convertible aircraft, according to the present invention, also provides for a foldable wing system which solves the problem of control during takeoff and landing. In fact, it has obtained a hybrid system capable to land in any area, surfaces or platforms. The claimed convertible aircraft is, for example, capable of landing on (or take-off from) mobile and unstable platforms which, in particularly adverse weather conditions, will be able to use a stabilized dynamic net to guarantee a safe landing.

In any case, such a solution also allows to optimize control of flying maneuvering, providing at the same time, an alternative and integrated landing gear.

As a further advantage, the claimed solution significantly reduces propulsion unit's overload during all flight transition phases, e.g. from take-off/landing to cruising and vice versa, through the optimization of the hybrid system. In other words, the operating life of the propulsion unit, comprising motor means configured to cruise the aircraft and preferably electrical motors for VTOL operations, is increased, with a reduction of motor removals for maintenance or failures therefore increasing the aircraft availability.

The convertible aircraft according to the invention is advantageously suitable to operate in the field of Unmanned Aerial Vehicle (UAV) and due to its simplicity of operational use represents a competitive advantage for military and civilian operators.

In order to manage any emergencies, the convertible aircraft is preferably equipped with a parachute whose opening may be automatic in case particular flight conditions occur or manually controlled when needed.

Other advantages, features and operation modes of the present invention will be made apparent from the following detailed description of some embodiments thereof, given by way of example and not for limitative purposes.

### Brief Description of the Figures

Reference will be made to the figures of the annexed drawings, wherein:
- figure 1 shows a prospective view of a preferred embodiment of a convertible aircraft according to the present invention in a cruising operative condition;
- figures 2A, 2B and 2C respectively show a prospective view, a rear view and a partially rotated view of a preferred embodiment of a convertible aircraft according to the present invention in a landing or take-off operation mode;

- figures 2D and 2E respectively show a front view and a prospective view of an embodiment of the wing folding system of the convertible aircraft according to the present invention in a landing or take-off operation mode;
- figure 3 shows a prospective view of a preferred embodiment of a convertible aircraft according to the present invention in an extracted configuration of second motor means;
- figures 4A, 4B and 4C each shows a top view of a preferred embodiment of a convertible aircraft according to the present invention with alternative configurations for implementing the second motor means;
- figure 5 shows a schematic representation of subsequent configurations of a preferred embodiment of the convertible aircraft according to the present invention from a taking-off phase to a cruise phase;
- figure 6 shows a schematic cross section of different shapes of the tail of the convertible aircraft according to the present invention.

### Detailed description of preferred embodiments

The present invention will be described hereinafter by referring to the above-mentioned figures.

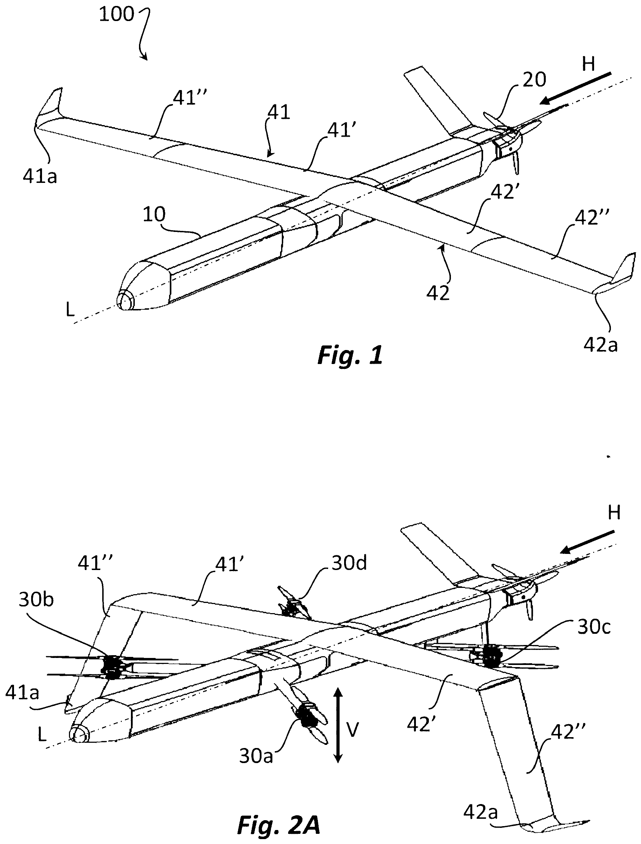

With initial reference to figure 1, a preferred embodiment of an aircraft 100 according to the present invention is described. In particular, the aircraft 100 can be denoted as a convertible aircraft, in the sense that it has a "hybrid" configuration capable of a structure modification according to different flight conditions.

As will be appreciated from the present description, the convertible aircraft of the invention provides for high aerodynamic efficiency and typical performance of an efficient fixed wing aircraft. It is preferably made from composite materials with pre-impregnated fabrics or materials. Tests carried out in the wind tunnel as well as the use of the most advanced design techniques guarantee said high performance. The convertible aircraft 100 of the present invention is particularly suitable to be configured as the so called unmanned aerial vehicle (UAV).

In general terms, the aircraft 100 comprises a fuselage body 10 extending in a longitudinal direction L of development. The aircraft 100 is equipped with a propulsion unit associated with the fuselage body 10 and apt to supply the thrust in order to make the aircraft flying.

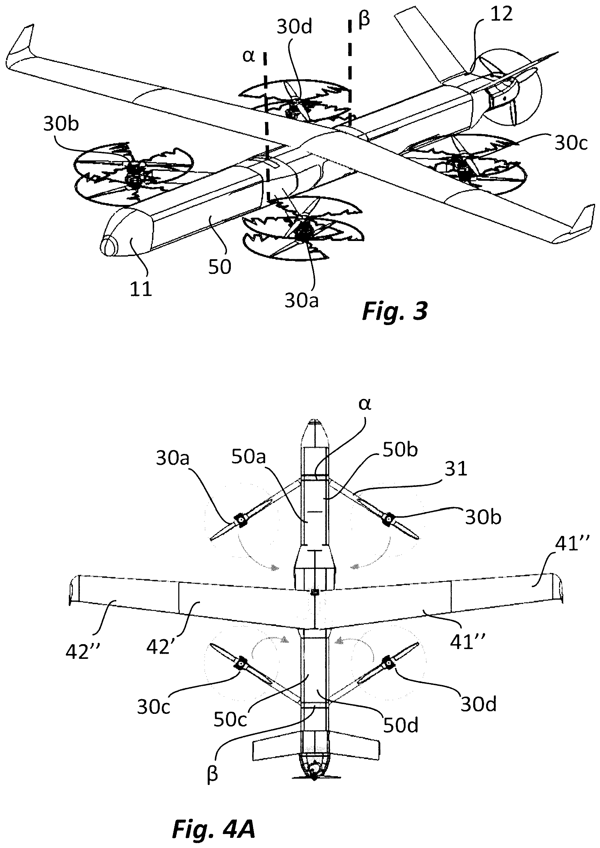

Preferably, the propulsion unit is connected to fuselage body 10 through coupling means, denoted with reference 31 in the example of figure 4A - 4C, for which a preferred embodiment will be described more in detail below. The propulsion unit comprises first motor means 20, configured to supply a thrust parallel H to said longitudinal direction L, and second motor means configured to supply a thrust orthogonal V to said longitudinal direction L.

In a preferred embodiment of the examples shown, the second motor means is a plurality of multi-rotor vertical-axis electric motor, preferably eight motors, coupled in pairs on opposite sides of the fuselage body, wherein each pair denoted with reference 30a, 30b, 30c, 30d.

The second rotor means is further configured to be movable between an extracted configuration and a retracted configuration, respectively shown with reference to Fig. 2A and 1. As will be explained in more detail below, the fuselage body 10 includes a receiving housing configured to entirely enclose the second motor means inside it in said retracted configuration.

The fuselage body 10 is also connected to at least a wing element, the latter being properly dimensioned in such a way as to meet the requirements of lift-to-drag ratio criteria necessary to allow the flight.

Said wing element is a foldable wing configured to be folded so as to define opposite terminal portions 41a, 42a each intended to support the aircraft 100 on a landing and/or taking-off region.

Although the examples shown refer to two distinct opposed wings 41, 42 projecting form the fuselage body to denote the foldable wings, the aircraft 100 may comprise a plurality of wings properly positioned with respect to the development of the fuselage body 10. Regardless of the number of wings, the present invention advantageously provides for a wing folding system that allows to vary the effects of aerodynamics forces to which the convertible aircraft 100 is subjected in different phases of flight. Such a wing folding system also provides for an aircraft more controllable during take-off and landing, especially with high immunity to disturbances due to the side wind.

Preferably, a dedicated control unit allows commanding the wing folding system to fold or unfold said wing element, for example whether the aircraft is landing or taking-off. The control unit may preferably include bidirectional communication means, operatively connected to or integrated with said wing folding system, in order to manage, remotely for example, all the operations associated with the aircraft's flight. Furthermore, the aircraft 100 may be equipped with detecting means, for example a 3D dual sensors camera at the nose of the fuselage body, and/or a measuring unit wherein the control unit is configured to send (or receive) data flight collected or the like.

In addition to the landing operation typical of fixed-wing aircraft, landing and stationing system on fixed ground platforms of the aircraft 100 of the present invention is realized through the downward and/or upward bending of said wings 41, 42 that, in the terminal portions 41a, 42a, realizes support regions on the platform.

In the example shown each foldable wing 41, 42 is preferably foldable into a first 41', 42' and a second portion 41", 42" said second portion comprising the opposite terminal portions 41a, 42a. Embodiments may envisage a different partition wherein a greater number of foldable portions is provided.

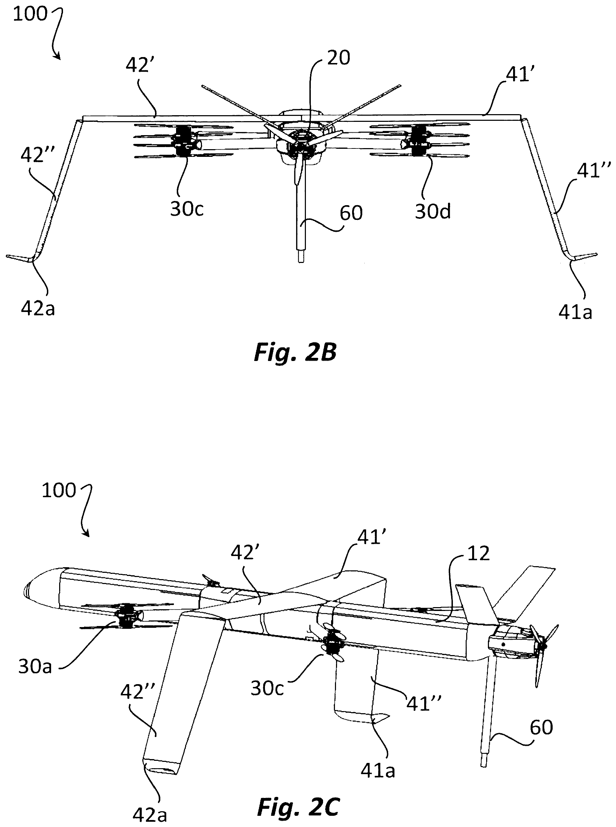

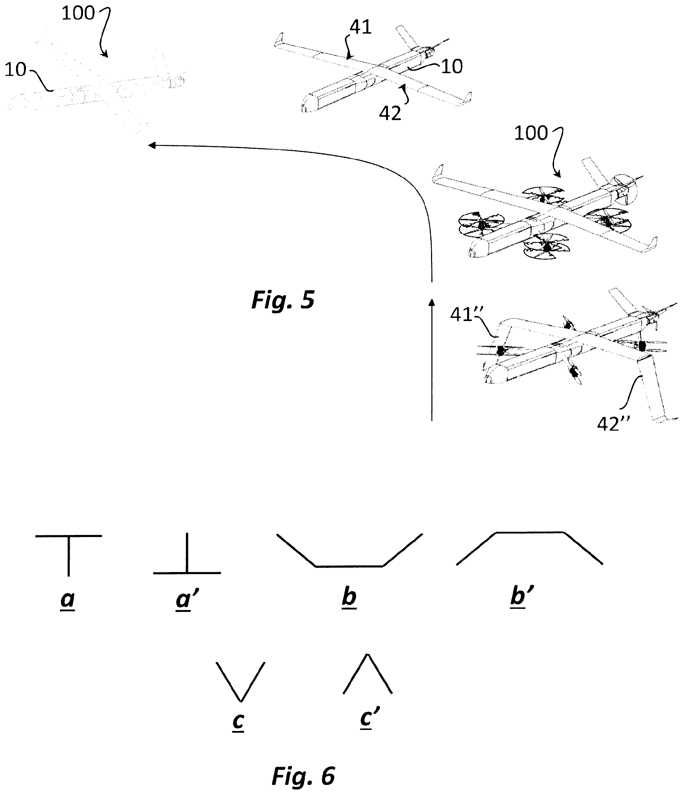

According to the present invention, additional supporting means are envisaged, for example by providing a retractable rod 60 comprising telescopic and cushioned members extending from the tail 12 of the fuselage body 10, as shown with particular reference to figures 2B and 2C. The tail 12 of the fuselage body may be shaped in different forms, for which preferred cross-section profiles are schematically represented in figure 6. In the examples shown, the tail 12 profile may be "T"-shaped or inversed "T"-shaped (respectively denoted with reference a and a'), substantially "U"-shaped or inversed "U"-shaped (respectively denoted with reference b and b') and "V"-shaped or inverted "V"-shaped (respectively denoted with reference c and c').

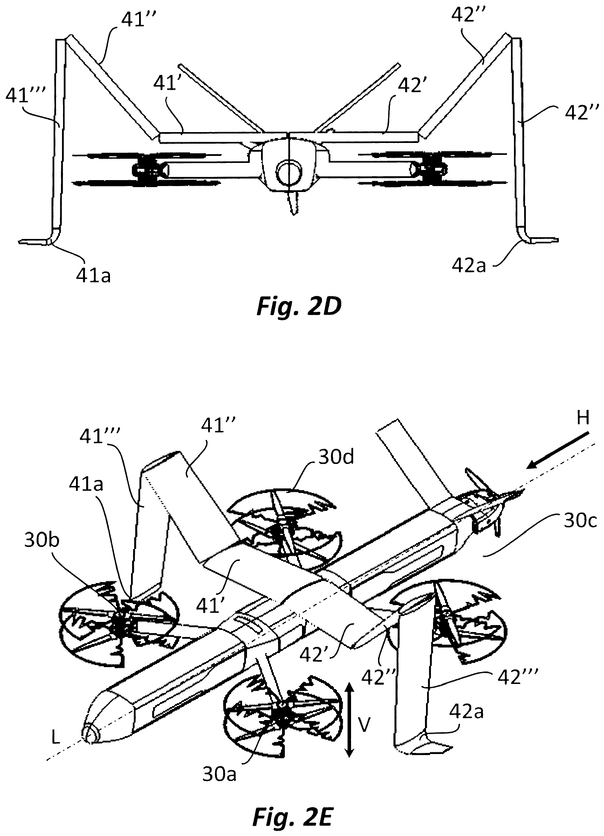

Moreover, the terminal portion is intended to be not only with reference to a respective foldable wing 41, 42 in its entirety but also as a terminal portion of one or more of the portions into which the foldable wing is composed. Therefore, it is to be understood that the wing folding system may comprise double folding wings, an example of which is shown in figures 2D and 2E. In this example, the wing folding system comprises opposed wing each comprising three portions denoted with 41', 41", 41 "', 42', 42", 42'''.

In case a wing is composed by three or more portions, the convertible aircraft could have as many terminal portions (support region) as the number minus one of the whole portions into which the foldable wing is composed.

The terminal portions 41a, 42a are preferably shaped so as to form at least a supporting surface configured to support the aircraft 100 on the landing/taking-off region. Preferably, the terminal portions are at the pivoting area between consecutive foldable portions of a wing. Preferably, the terminal portions may also comprise anchoring means configured to secure the aircraft to the landing/taking-off region.

As previously mentioned, the aircraft 100 is therefore advantageously capable of landing or taking-off not only from ground or fixed platform but also from unstable platform/grounds. The aircraft may also be employed in conjunction with a landing net. Preferably the net is a dynamic net comprising stabilizing means, for example a system of accelerometers and hydraulic jacks, configured to keep the net always in a horizontal position. Said net should be appropriately sized according to the aircraft's size. Advantageously, safe landings are ensured even in particularly critical situations that, especially in the case of naval units in navigation, may arise due to the wave motion. A dynamic GPS (Global Positioning System) mounted on the aircraft 100 may also be used to ensure safe landing in the middle of net.

Landing on the net can be possible either with extended wings configuration of aircraft 100 or trough bending (downward or upward) of the wings.

Referring now to figures 3, 4A-4C, a preferred embodiment of the propulsion unit equipment of the aircraft 100 is described.

The first motor means 20 configured to supply a thrust parallel H to the longitudinal direction L, may preferably and alternatively comprise: Heavy Fuel Engine (HFE) and two-bladed or three-bladed propellers with fixed pitch or variable pitch mounted at the tail 12 of the fuselage body 10, HFE and two-bladed or three-bladed propellers with fixed pitch or variable pitch mounted at the nose 11 of fuselage body 10, HFE and two-bladed or three-bladed propellers with fixed pitch or variable pitch mounted both at the nose 11 and the tail 12 of the fuselage body 10, jet engine mounted at the tail of fuselage body 10.

Gasoline engines can be alternatives to heavy fuel ones.

Such horizontal propulsion system has low drag for more endurance of the aircraft and incorporates outstanding innovations in design and operating solutions.

In a preferred embodiment the second motor means 30a, 30b, 30c, 30d, configured to supply a thrust orthogonal V to the longitudinal direction L and suitable for vertical takeoff and landing operation of the aircraft 100, comprises eight motors mounted in pairs. Alternative embodiments may comprise four motors. The coupling means 31 pivotally connect each motor (or paired motor) to the fuselage body. The coupling means, preferably rods, pivotally couples the second motor means 30a, 30b, 30c, 30d to the fuselage body 10 about a rotation axis orthogonal to a plane comprising the longitudinal direction L of development.

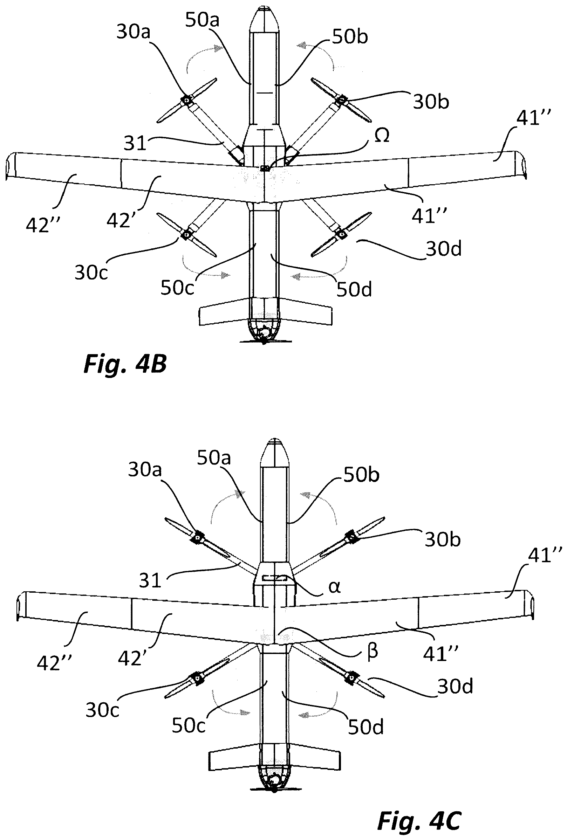

With specific reference to figure 4A and 4C, the coupling means 31 is connected to the fuselage body 10 so as that said second motor means pivots about a two distinct rotation axis, denoted with α, β. Figure 4B shows an alternative embodiment wherein a positioning of the coupling means 31 realizes a rotation of the second motor means abut a single rotation axis Ω.

With further reference to figure 5, an exemplary scheme of subsequent configurations of the aircraft structure according to the present invention with reference to a transition phase from taking off to a horizontal flight is described.

The second motor means 30a, 30b, 30c, 30d is gradually stopped while the first motor means start to supply the horizontal propulsions. The coupling means 31 is also activated in order to move the second motor means from the extracted configuration to conceal it inside the receiving housing associated to the fuselage body 10. The coupling means 31 is also lodged inside the receiving housing in said retracted configuration.

A preferred embodiment provides for a housing (or compartment) formed inside the fuselage body 10 that extends mainly along the longitudinal direction L and, more preferably, each motor 30a, 30b, 30c, 30d is intended to be received inside the fuselage body 10 by a corresponding receiving housing 50a, 50b, 50c, 50d.

As the coupling means 31 is retracted and the second motor means is also inside the receiving housing, the latter is closed. The configuration of the aircraft 100 is such that in a retracted configuration of the second motor means, the fuselage body 10 is "clean", namely a configuration that advantageously reduces drag in aerodynamic terms. The housing is preferably provided with a closing system, like closing panels, doors or the like.

It will be appreciated as the chance to modify the aircraft structure in order to completely hide obstructive bulk elements, as in particular those one associated to propulsion, especially in case of motor means configured for vertical take off and landing operation (VTOL), allows the aircraft to fly in an efficient way, for example in terms of reducing the time to reach the target of its mission and/or increasing the flight autonomy.

In case a transition from horizontal flight to a landing configuration is required, the coupling means returns the second motor means into the extracted configuration. The second motor means is then restarted providing for the vertical sustaining force while the horizontal propulsion is stopped. The aircraft 100 may also be provided with auxiliary landing means, associated to the fuselage body 10, for example parachutes.

The control unit is also capable of managing, in addition to the maneuvers associated with the wing folding system, all the variations in shape of the aircraft ("morphing aircraft") associated with the propulsion unit in different flight phases.

Preferably, the control unit comprises one or more controllers which may be implemented, in alternative or in combination, as a PID Controller, an Adaptive-Predictive Controller, a Gain Scheduling Controller with variation of parameters: Table Scheduler, Inverse Scheduler, Proportional Scheduler, Quadratic Scheduler.

In a preferred embodiment, a Gain Scheduling controller is adopted. Such type of controller provides for a nonlinear approach, using a family of linear controllers, each providing satisfactory control for a different operating point of the system. A Gain-Scheduling control is typically implemented using a controller whose gains are automatically adjusted as a function of scheduling variables that describe the current operating point. Such variables include time, external operating conditions, system states such as type of vehicle (morphing aircraft), flight phase, flight guidance, etc.

The Gain Scheduling preferably involves the application of different controller tuning parameters as a process transitions from one operating range to another. In this way, the controller gains and time constant can be more closely aligned with the process's nonlinear dynamics.

Alternative embodiments provide for a lookup table used to register the different PID tuning parameters that correspond with a process's typical operating ranges. These perform a linear interpolation function that incrementally adjusts tuning parameters as a process steadily moves from one range of operation to the next. The control system preferably includes tools to automatically adjust PID settings based on either operating range.

The present invention has hereto been described with reference to preferred embodiments thereof. It is understood that other embodiments might exist, all falling within the concept of the same invention, as defined by the protective scope of the claims hereinafter.

## Claims

1. A convertible aircraft (100) comprising:
▪ a fuselage body (10), extending according to a main longitudinal direction (L) of development and including a receiving housing (50a, 50b, 50c, 50d);
▪ a propulsion unit, connected to the fuselage body (10) and comprising
- first motor means (20), configured to supply a thrust parallel (H) to said longitudinal direction (L),
- second motor means (30a, 30b, 30c, 30d), configured to supply a thrust orthogonal (V) to said longitudinal direction (L),
▪ a wing folding system comprising opposed wings (41, 42) projecting from the fuselage body (10), which opposed wings (41, 42) being configured to be folded so as to define opposite terminal portions (41a, 42a) each intended to support the aircraft (100) on a landing and/or taking-off region,
**characterized in that** said second motor means (30a, 30b, 30c, 30d) are movable between an extracted configuration and a retracted configuration, **in that** the receiving housing (50a, 50b, 50c, 50d) of the fuselage body (10) and the second motor means (30a, 30b, 30c, 30d) are configured so that the receiving housing entirely encloses the second motor means (30a, 30b, 30c, 30d) inside it in said retracted configuration and **in that** said wing folding system comprises two opposite wings (41, 42) and a third retractable supporting element (60) comprising an additional terminal portion intended to support the aircraft (100) on the landing and/or taking-off region.

2. The convertible aircraft (100) according to claim 1, wherein said housing (50a, 50b, 50c, 50d) is formed inside the fuselage body (10) and extends mainly along said longitudinal direction (L).

3. The convertible aircraft (100) according to any of the previous claim, wherein the second motor means comprises a plurality of motors (30a, 30b, 30c, 30d) intended to be received inside corresponding housings (50a, 50b, 50c, 50d) formed in the fuselage body (10).

4. The convertible aircraft (100) according to any of the previous claim, further comprising coupling means configured to pivotally coupling said second motor means (30a, 30b, 30c, 30d) to the fuselage body (10) about a rotation axis (Ω; α, β) orthogonal to a plane comprising said longitudinal direction (L).

5. The convertible aircraft (100) according to the previous claim, wherein said second motor means is pivotable about a single rotation axis (Ω) or about at least two distinct rotation axes (α, β).

6. The convertible aircraft (100) according to any of the previous claim, wherein said propulsion unit comprises eight second motor means (30a, 30b, 30c, 30d) positioned in pairs on opposite sides of the fuselage body (10).

7. The convertible aircraft (100) according to any of the previous claim, wherein said second motor means comprises vertical-axis multi-rotor electric motor (30a, 30b, 30c, 30d).

8. The convertible aircraft (100) according to any of the previous claim, further comprising a control unit configured to be associated with means for remotely controlling the convertible aircraft (100) and commanding said wing folding system.

9. The convertible aircraft (100) according to any of the previous claim, wherein said at least a foldable wing (41, 42) is configured to be folded in said extracted configuration.

10. The convertible aircraft (100) according to any of the previous claim that is an unmanned aerial vehicle.

## Patentansprüche

1. Umrüstbares Flugzeug (100), umfassend:
- einen Rumpfkörper (10), der sich in einer Hauptlängsrichtung (L) der Ausdehnung erstreckt und ein Aufnahmegehäuse (50a, 50b, 50c, 50d) beinhaltet;
- eine Antriebseinheit, die mit dem Rumpfkörper (10) verbunden ist und umfasst
- erste Motormittel (20), die dazu eingerichtet sind, einen Schub parallel (H) zu der Längsrichtung (L) zu liefern,
- zweite Motormittel (30a, 30b, 30c, 30d), die dazu eingerichtet sind, einen Schub orthogonal (V) zu der Längsrichtung (L) zu liefern,
- ein Flügelklappsystem, das gegenüberliegende Flügel (41, 42) umfasst, die aus dem Rumpfkörper (10) hervorragen, wobei die gegenüberliegenden Flügel (41, 42) dazu eingerichtet sind, so gefaltet zu werden, dass sie gegenüberliegende Endabschnitte (41a, 42a) definieren, die jeweils dazu bestimmt sind, das Flugzeug (100) in einem Lande- und/oder Startbereich zu tragen
**dadurch gekennzeichnet, dass** die zweiten Motormittel (30a, 30b, 30c, 30d) zwischen einer ausgezogenen Konfiguration und einer eingezogenen Konfiguration beweglich sind, dass das Aufnahmegehäuse (50a, 50b, 50c, 50d) des Rumpfkörpers (10) und die zweiten Motormittel (30a, 30b, 30c, 30d) dazu eingerichtet sind, dass das Aufnahmegehäuse die zweiten Motormittel (30a, 30b, 30c, 30d) in der eingezogenen Konfiguration vollständig in seinem Inneren umschließt und dass das Flügelklappsystem zwei gegenüberliegende Flügel (41, 42) und ein drittes einziehbares Stützelement (60) umfasst, das einen zusätzlichen Endabschnitt umfasst, der dazu bestimmt ist, das Flugzeug (100) im Lande- und/oder Startbereich abzustützen.

2. Umrüstbares Flugzeug (100) nach Anspruch 1, wobei das Gehäuse (50a, 50b, 50c, 50d) innerhalb des Rumpfkörpers (10) ausgebildet ist und sich hauptsächlich entlang der Längsrichtung (L) erstreckt.

3. Umrüstbares Flugzeug (100) nach einem der vorhergehenden Ansprüche, wobei die zweiten Motormittel eine Vielzahl von Motoren (30a, 30b, 30c, 30d) umfassen, die dazu bestimmt sind, in entsprechenden Gehäusen (50a, 50b, 50c, 50d) aufgenommen zu werden, die in dem Rumpfkörper (10) ausgebildet sind.

4. Umrüstbares Flugzeug (100) nach einem der vorhergehenden Ansprüche, ferner umfassend Kopplungsmittel, die dazu konfiguriert sind, die zweiten Motormittel (30a, 30b, 30c, 30d) schwenkbar um eine Drehachse (Ω; α, β) orthogonal zu einer Ebene, die die Längsrichtung (L) umfasst, mit dem Rumpfkörper (10) zu koppeln.

5. Umrüstbares Flugzeug (100) nach dem vorhergehenden Anspruch, wobei die zweiten Motormittel um eine einzige Drehachse (Ω) oder um wenigstens zwei verschiedene Drehachsen (α, β) schwenkbar sind.

6. Umrüstbares Flugzeug (100) nach einem der vorhergehenden Ansprüche, wobei die Antriebseinheit acht zweite Motormittel (30a, 30b, 30c, 30d) umfasst, die paarweise auf gegenüberliegenden Seiten des Rumpfkörpers (10) angeordnet sind.

7. Umrüstbares Flugzeug (100) nach einem der vorhergehenden Ansprüche, wobei die zweiten Motormittel einen Vertikalachsen-Multirotor-Elektromotor (30a, 30b, 30c, 30d) umfassen.

8. Umrüstbares Flugzeug (100) nach einem der vorhergehenden Ansprüche, ferner umfassend eine Steuereinheit, die dazu eingerichtet ist, mit Mitteln zum Fernsteuern des umrüstbaren Flugzeugs (100) assoziiert zu werden und das Flügelklappsystem zu steuern.

9. Umrüstbares Flugzeug (100) nach einem der vorhergehenden Ansprüche, wobei der mindestens eine Klappflügel (41, 42) dazu konfiguriert ist, in der ausgezogenen Konfiguration geklappt zu werden.

10. Umrüstbares Flugzeug (100) nach einem der vorhergehenden Ansprüche, das ein unbemanntes Luftfahrzeug ist.

## Revendications

1. Aéronef convertible (100) comprenant :
un corps de fuselage (10) s'étendant selon une direction longitudinale principale (L) de développement et comprenant un logement de réception (50a, 50b, 50c, 50d) ;
une unité de propulsion raccordée au corps de fuselage (10) et comprenant :
un premier moyen de moteur (20) configuré pour fournir une poussée parallèle (H) à ladite direction longitudinale (L),
un second moyen de moteur (30a, 30b, 30c, 30d) configuré pour fournir une poussée orthogonale (V) à ladite direction longitudinale (L),
un système de pliage d'aile comprenant des ailes opposées (41, 42) faisant saillie du corps de fuselage (10), lesquelles ailes opposées (41, 42) étant configurées pour être pliées afin de définir des parties terminales opposées (41a, 42a) chacune prévues pour supporter l'aéronef (100) sur une région d'atterrissage et/ou de décollage,
**caractérisé en ce que** lesdits seconds moyens de moteur (30a, 30b, 30c, 30d) sont mobiles entre une configuration extraite et une configuration rétractée, **en ce que** :
le logement de réception (50a, 50b, 50c, 50d) du corps de fuselage (10) et le second moyen de moteur (30a, 30b, 30c, 30d) sont configurés de sorte que le logement de réception enferme complètement le second moyen de moteur (30a, 30b, 30c, 30d) à l'intérieur de ce dernier dans ladite configuration rétractée, et **en ce que** :
ledit système de pliage d'aile comprend deux ailes opposées (41, 42) et un troisième élément de support rétractable (60) comprenant une partie terminale supplémentaire prévue pour supporter l'aéronef (100) sur la région d'atterrissage et/ou décollage.

2. Aéronef convertible (100) selon la revendication 1, dans lequel ledit logement (50a, 50b, 50c, 50d) est formé à l'intérieur du corps de fuselage (10) et s'étend principalement le long de ladite direction longitudinale (L).

3. Aéronef convertible (100) selon l'une quelconque des revendications précédentes, dans lequel le second moyen de moteur comprend une pluralité de moteurs (30a, 30b, 30c, 30d) prévus pour être reçus à l'intérieur des logements (50a, 50b, 50c, 50d) correspondants formés dans le corps de fuselage (10).

4. Aéronef convertible (100) selon l'une quelconque des revendications précédentes, comprenant en outre un moyen de couplage configuré pour coupler, de manière pivotante, ledit second moyen de moteur (30a, 30b, 30c, 30d) au corps de fuselage (10) autour d'un axe de rotation (Ω ; α ; β) orthogonal à un plan comprenant ladite direction longitudinale (L).

5. Aéronef convertible (100) selon la revendication précédente, dans lequel ledit second moyen de moteur peut pivoter autour d'un axe de rotation (Ω) unique ou autour d'au moins deux axes de rotation (α, β) distincts.

6. Aéronef convertible (100) selon l'une quelconque des revendications précédentes, dans lequel ladite unité de propulsion comprend huit seconds moyens de moteur (30a, 30b, 30c, 30d) positionnés par paires sur les côtés opposés du corps de fuselage (10).

7. Aéronef convertible (100) selon l'une quelconque des revendications précédentes, dans lequel ledit second moyen de moteur comprend un moteur électrique à plusieurs rotors à axe vertical (30a, 30b, 30c, 30d).

8. Aéronef convertible (100) selon l'une quelconque des revendications précédentes, comprenant en outre une unité de commande configurée pour être associée avec des moyens pour contrôler l'aéronef convertible (100) à distance et commander ledit système de pliage d'aile.

9. Aéronef convertible (100) selon l'une quelconque des revendications précédentes, dans lequel ladite au moins une aile pliable (41, 42) est configurée pour être pliée dans ladite configuration extraite.

10. Aéronef convertible (100) selon l'une quelconque des revendications précédentes qui est un véhicule aérien sans pilote.
